# EUROPEAN PATENT SPECIFICATION

(11) **EP 3 750 017 B1**
(45) Date of publication and mention of the grant of the patent: **26.05.2021**
(21) Application number: 19701883.1
(22) Date of filing: 04.02.2019
(51) Int. Cl.: G05D 1/00, G06F 3/00

(54) **SYSTEM FOR CONTROLLING MOBILE DEVICE**
SYSTEM ZUR STEUERUNG EINER MOBILEN VORRICHTUNG
SYSTÈME DE COMMANDE DE DISPOSITIF MOBILE

(30) Priority: 05.02.2018 IT 201800002417
(43) Date of publication of application: 16.12.2020
(73) Proprietor: SUPSI (Scuola Universitaria Professionale Della Svizzera Italiana), 6928 Manno (CH)
(72) Inventor: GAMBARDELLA, Luca Maria, 21049 Tradate (VA) (IT); GIUSTI, Alessandro, 6900 Massagno (LU) (CH); GROMOV, Boris, 6900 Lugano (CH); GUZZI, Jérôme, 6744 Personico (CH)
(74) Representative: M. Zardi & Co S.A.
(86) International application number: PCT/EP2019/052580
(87) International publication number: WO 2019/149921

(56) References cited:
- EP-A1- 3 007 030
- WO-A1-2016/167946
- US-A1- 2018 024 546

## Description

### Field of application

The present invention relates to a system and a method for controlling a mobile device, for example a drone or a robot which can be used in a domestic or industrial environment. In particular, the term "mobile" indicates the capacity of the device to move with the aid of its own mechanical means, for example on the ground, by means of wheels or continuous tracks, or in the air, by means of propellers, these mechanical means being able to be driven by a motor, preferably an electric motor, again on-board the mobile device. The invention relates to a system of the aforementioned type, able to establish a correspondence between the mobile device and an electronic device for managing control thereof, also when there are numerous mobile devices which must be remotely controlled, at least during one phase of their use.

### Prior art:

The systems for controlling mobile devices, for example the robots used in an industrial or domestic environment, drones and in general all the mobile devices which are situated at a distance from a respective electronic control device envisage the transmission of radio commands, for a change in direction, a movement forwards, backwards, to the right or to the left or along predetermined trajectories or, in the case of drones, commands for a change in height, taking off, landing, etc.

The known control systems have achieved a significant level of sophistication and allow the mobile devices to be remotely controlled in a very efficient manner. However, the continuously increasing level of automation may give rise to very complex situations which the known control systems are unable to manage.

For example, in the specific case of drones, namely pilotless aircraft, applications have been developed where the drone may fly long distances autonomously and during these flights is able to perform actions autonomously, i.e. not under the control of an operator. In such cases, during the flight, the drone may not be in radio communication with a remote control device and be able to land autonomously.

However, it has been found that in such applications the landing operation is particularly difficult and often results in collisions with rough terrain, objects, buildings, vehicles or persons and is a possible cause of accidents involving objects or persons or structural damage to the drone itself. For this reason, hitherto it is preferable for the landing operation to be assisted by a remote operator who is able to guide the drone with radio commands after identifying a suitable landing position.

Despite this, establishing the correct association between a remote control device and a drone after an autonomous flight of the drone, i.e. after a flight where the drone was not under the control of the remote control device, gives rise to various problems some of which are briefly explained below.

Firstly, in the situations described above and those situations which are expected to arise in future applications of drones, several drones may be present in an area where a remote control device (or more than one remote control device) is/are operative, in which case it is necessary to ensure a correct association between the remote control device and a specific drone which is to be controlled by the remote control device.

Furthermore, the distance between the operator using the remote control device and the drone may be such as to prevent the operator from being able to visually identify the orientation of the drone and therefore make it difficult to perform the displacement manoeuvres to the right or left which, in fact, could be inverted; this may happen if the drone is rotated 180 degrees with respect to the operator.

A further complication arises from the difficulty of using a conventional remote control device provided with levers for the forwards, backwards, right or left movements or changes in height, which do not correspond to natural movements for the operator and may result in an incorrect landing position, especially if the drone is made to land at a considerable distance from the operator and if the operator is not trained to provide this type of command.

Examples of known control systems are described in US 2018/024546, EP 3 007 030 and WO 2016/167946.

The technical problem forming the basis of the present invention is that of devising a system for controlling a drone or a robot which solves all the aforementioned problems, for example making it possible to start controlling the drone, even at a considerable distance, provided that it is within the visual range of the operator and within the radius of action of a remote control device, after the drone has completed a totally autonomous flight, outside said radius of action, defining with precision the orientation of the drone with respect to the operator and identifying which drone, from among several drones in flight, the operator intends to control, substantially solving the technical problems which hitherto have been associated with the known control systems.

### Summary of the invention

The invention is set forth in the independent claims 1 and 14.

The idea forming the basis of the present invention is to provide a control system for a mobile device which allows identification by means of an electronic device which is intended to control the mobile device, when the mobile device is within or comes within the radio range of the electronic device and the visual range of the operator, excluding possible incorrect association between the mobile device and the electronic device, also in terms of orientation, and the transmission of commands from the electronic device to the mobile device only following correct identification of the drone.

On the basis of the idea for a solution described above, the technical problem is solved by a system for controlling mobile device, comprising:
- an electronic device associated with the mobile device and intended to be worn on the human body, preferably on an arm or wrist, for detecting predetermined movements of the human body and transmitting commands to the mobile device, corresponding to said predetermined movements;
- a memory comprising information relating to a set-up action which can be performed by the mobile device in response to a set-up command which can be transmitted by the electronic device following one of said predetermined movements, also indicated as "engagement movement" for engaging the mobile device, characterized in that it comprises:
- a controller adapted to check whether a movement performed by the human body when remotely pointing at the mobile device to follow the mobile device while moving during execution of said set-up action, also indicated as "checking movement", corresponds to the set-up action information stored in said memory, said check also being indicated as "command validation", where the mobile device is configured to start the set-up action (i.e. it is configured to start moving) before being remotely followed by the human body; and characterized in that
- said controller is configured to prevent the transmission of other commands to the mobile device, besides the set-up command, if said command validation does not establish said correspondence.

The set-up action of the mobile device is a movement. The operator guides remotely the movement of the mobile device pointing remotely at the device with a finger or other pointing means and guiding remotely the mobile device, while continuing to point at the device during the movement.

For example, in the case of a system controlling a drone, the electronic device may be incorporated in a band which can be worn on the arm, the engagement between the electronic device and the drone may be performed by means of a set-up command which consists in positioning the arm in a predefined position, for example static pointing position (which can be recognized on the basis of predetermined movement patterns) and the set-up action performed by the drone may be a rapid movement to the right, to the left, upwards and downwards; in this case, the command validation consists in checking that the movement of the electronic device on the arm corresponds to the set-up action, namely a movement to the right, to the left, upwards and downwards. Only in the event of actual correspondence does the drone accept the following commands, for example a landing command.

Still with reference to the example given above, the radio connection between the controller (i.e. the apparatus which houses the controller, be it the electronic device or other computer) and the mobile device may be continuous or may occur following a trip or "mission" during which the mobile device was outside the radio range of the controller and operating autonomously, then coming back within said range so that radio contact is re-established with the controller. In any case. when the operator (electronic device of the operator) assumes control of the mobile device or resumes control of the mobile device after a "mission", the radio connection between the mobile device and the controller is already active. In particular, when the operator performs a predetermined movement corresponding to the set-up command, the controller transmits to the mobile device the information relating the set-up action, so that the mobile device may move according to the set-up action and allow the checking or validation of the commands, something which presupposes the existence of a pre-existing radio contact.

In the case where N mobile devices are within the radio range of a controller, and only one operator is responsible for operating the electronic device, for example by means of one or more arm-bands, it is envisaged that the controller is in radio communication with the N mobile devices and that the controller, in this case preferably incorporated in a computer, is in communication with the electronic device of the operator. In this specific case also, the radio connection between the controller and all the mobile devices is a necessary condition for control thereof. Even more particularly, when the operator performs the predetermined movement corresponding to the set-up command, the controller transmits to all the mobile devices information relating to the set-up action, each according to a different pattern (or sequence of movements) so that each mobile device may move in a manner different from the other devices and thus allow checking or validation of the commands between the electronic device of the operator and only the mobile device which performed the same pattern of movements performed by the operator. In particular, the controller compares the movements of the arm (electronic device on the arm) with the movements performed by each mobile device and identifies which of the mobile devices the operator has actually pointed at. Moreover, the controller is able to determine the orientation and position of the mobile device with respect to the operator, as described in greater detail in the description below.

In the light of the above, the expressions "associate the controller" or "associate the electronic device with a mobile device" or "establish a radio connection" indicates a logical association, it being therefore assumed that the radio contact between the mobile device and the electronic device is already active, this being a necessary condition for the operation of the control system according to the present invention.

After the controller has determined which mobile device the operator is referring to and the orientation/position of the mobile device with respect to the operator, the controller may start to control the mobile device actually identified by the operator, allowing the operator to control the mobile device in the expected manner.

According to other embodiments, the set-up action which can be performed by the mobile device comprises different changes in direction, preferably at least one sequence of two of the following movements: a movement to the right, to the left, forwards, backwards, upwards or downwards. However, it is envisaged the mobile device may move along curvilinear - for example circular or figure-of-eight - paths.

In the case where the mobile device is a drone, one of the possible commands which may be transmitted by the electronic device to the mobile device following validation of the commands is a drone landing command. The landing command is associated preferably with a landing movement (of the arm or wrist or other part of the body associated with the mobile device) comprising pointing the drone remotely from a current stationary flying position down to a point on the ground along the vertical of the flying position, and said landing movement being associated with the landing command from said controller only if followed by the stationary indication of the landing point for a predetermined time interval, i.e. preferably 3 seconds.

It is also quite possible for the system forming the basis of the present invention to be used for controlling a drone during a flying operation different from the landing operation mentioned above. For example, the system may be used to control a drone during a flying operation carried out in order to record photographs or videos or take measurements of a land area or topographic reliefs.

According to one aspect of the present invention, the controller is programmed to recognize an orientation of the mobile device with respect to the human body by means of said command validation. The controller is also programmed to determine the distance between the mobile device and the electronic device.

In particular, the controller determines the relative orientation of the mobile device and the operator, namely the electronic device worn by the operator.

The determination of the orientation may be performed for example if the mobile device is rotated through 180 degrees with respect to the operator, namely with the front part of the mobile device directed towards the operator (i.e. facing each other); in this case, for example, a movement of the mobile device to the right of the operator corresponds to a movement towards the left of the operator's arm (with respect to the position of the operator). On the other hand, if the mobile device has the same orientation as the operator (for example with the rear part of the drone directed towards the operator, i.e. arranged one behind the other), a movement of the mobile device to the right of the operator corresponds to a movement to the right of the operator's arm.

The determination of the above orientation is provided by way of example with reference to a simple situation (relative displacement of 0 degrees or 180 degrees), but the system according to the present invention is able to recognize the correct orientation even when the relative displacement of the mobile device and the operator is different from 0 degrees or 180 degrees (example provided above), for example if there is an angular displacement of 30 degrees.

In all of the examples described above, if the outcome of the check or command validation is positive, i.e. if the controller establishes that the movement performed by the mobile device corresponds in actual fact to the movement of the operator, then the controller enables the sending of further commands from the electronic device to the mobile device.

Vice versa, if the controller establishes that the movement performed by the mobile device differs from to the movement of the operator, then the controller does not enable the sending of further commands from the electronic device to the mobile device.

The procedure described above may be performed also in the case where several drones - for example two drones - and only one operator are present. In this case, the operator performs again the set-up movement. Both the drones start to move in accordance with the predefined movement, which is specific for each drone. The controller compares the movement of the arm with the movement of each of the drones. If the movement of the arm corresponds to the movement of one of the two drones, for at least one of the possible orientations which the drone may have with respect to the operator, then the controller identifies the drone which the operator is pointing at and its orientation and therefore allows controlling of the drone. On the other hand, namely if the movement of the arm does not correspond to the movement of any drone, for none of the possible orientations which each drone may have with respect to the operator, then the controller does not enable control of either one of the two drones.

Preferably, the electronic device comprises at least a first and a second component, said first component being worn on the arm and said second component being worn on the wrist or the forearm, said predetermined movement associated with the set-up command corresponding to an extension of the arm and keeping the arm in said extended position for a predetermined time interval, preferably 3 seconds, and said extension being determined by said controller on the basis of at least one predetermined movement pattern or predetermined model of movement of the first component with respect to the second component.

In another of the possible embodiments, the electronic device comprises an operating pushbutton or operating means and said engagement movement of the mobile device corresponds to operation of said pushbutton or operating means.

According to one aspect of the present invention, the controller and a transmitter of the commands are included in another device, preferably a computer, a smartphone or other processor, in wireless communication with said electronic device, preferably via a wireless network or Bluetooth interface.

However, it is also quite possible for the controller and a transmitter of said commands to be incorporated in the electronic device.

Preferably, the electronic device comprises an inertial measurement unit used to estimate the orientation of the operator's arm, even more preferably at least one accelerometer and a gyroscope.

The system according to the present invention may be used to control several mobile devices, for example a robot provided with means for moving on the ground.

In this case, according to an embodiment, the set-up action which can be performed by the robot comprises the emission of a light source or a light beam concentrated in one point, with predetermined changes in direction, preferably at least one sequence of two from among the following changes in direction: movement to the right, to the left, forwards, backwards, upwards, downwards. In this case, in order to perform the set-up step, the operator may follow the light source or light beam with a movement of the arm, in accordance with the same criteria listed above.

Below a further disclosed control method and system are described, whereby the checking step is not performed to check whether the movement performed by the human body when remotely pointing at the mobile device in order to guide the mobile device during execution of the set-up action corresponds to the set-up action information stored in the memory. Instead the checking step is performed to check whether the movement performed by the human body when remotely pointing at the mobile device in order to guide the mobile device during the execution of any action corresponds to the trajectory followed by the mobile device for at least a predefined time period t.

For example, at a given time instant t, the mobile device may be moving because it is completing an assignment along a predefined trajectory or because it is avoiding an obstacle, in which case it does not constitute a predefined trajectory as such. These movements of the mobile device may be known beforehand to the controller, if predefined, or may be communicated by the mobile device during execution of the assignment, in real time.

The user may decide to start a set-up action at any time instant (including t>t1); this action consists in remotely pointing at the mobile device during the execution of the movements already in progress, for a predetermined period of time. The controller checks whether the movement of the operator's arm corresponds to the movement of the mobile device at least for said predefined time period, for example the last 5 seconds. If a correspondence is established it allows the operator take over control of the commands for the mobile device.

Further characteristic features and advantages of the control system according to the present invention will become clear from an embodiment thereof, provided purely by way of a non-limiting example, with reference to the attached drawings.

### Description of the attached drawings

Figure 1 shows in schematic form the control system according to the present invention, during one stage of its operation.
Figure 2 shows in schematic form the control system according to the present invention, during another stage of its operation.
Figure 3 shows in schematic form the control system according to the present invention, during a further stage of its operation.
Figures 4-5 show in schematic form the control system according to the present invention, during another stage of its operation.
Figures 6-7 show in schematic form the control system according to the present invention, during another stage of its operation.
Figure 8 shows in schematic form some details of the control system according to the present invention.

### Detailed description of the invention

With reference to the attached figures, these show a control system according to the present invention during some stages of its operation, with particular reference to a mobile device 10 which can be controlled remotely by an electronic device 20.

In particular, the example illustrated with reference to the figures consists of a drone 10 which can be controlled by an electronic device 20 incorporated in two separate, preferably stretchable bands 20, which can be worn on the arm and forearm of an operator. The example described, however, is not limiting since the control system may be used, for example, to control another type of mobile device 10, such as a robot which moves on the ground, and/or by means of another type of electronic device 20 designed to recognize the movements of the human body, and in particular a part of the body, not necessarily the arm. The electronic devices 20 according to the present invention include for example those which are incorporated in a single stretch band 20 which can be worn on the arm, the wrist, a leg or the head, and therefore not in two separate bands, or those provided with further operating means such as a pushbutton or other types of sensors.

Still with reference to the figures, the electronic device 20 communicates with a processor provided with a memory 30 and a controller 40 designed to send the commands to the drone 10 and to carry out the necessary checks for correct interaction between drone/electronic device 20, as will be explained in the description below and substantially forming a control and communications interface between the drone 10 and the electronic device 20, for example based on a Bluetooth or Wi-Fi protocol. However, it is quite possible for the controller 40 and the memory 30 to be physically associated with another apparatus of the control system according to the present invention, for example incorporated in the electronic device 20 itself.

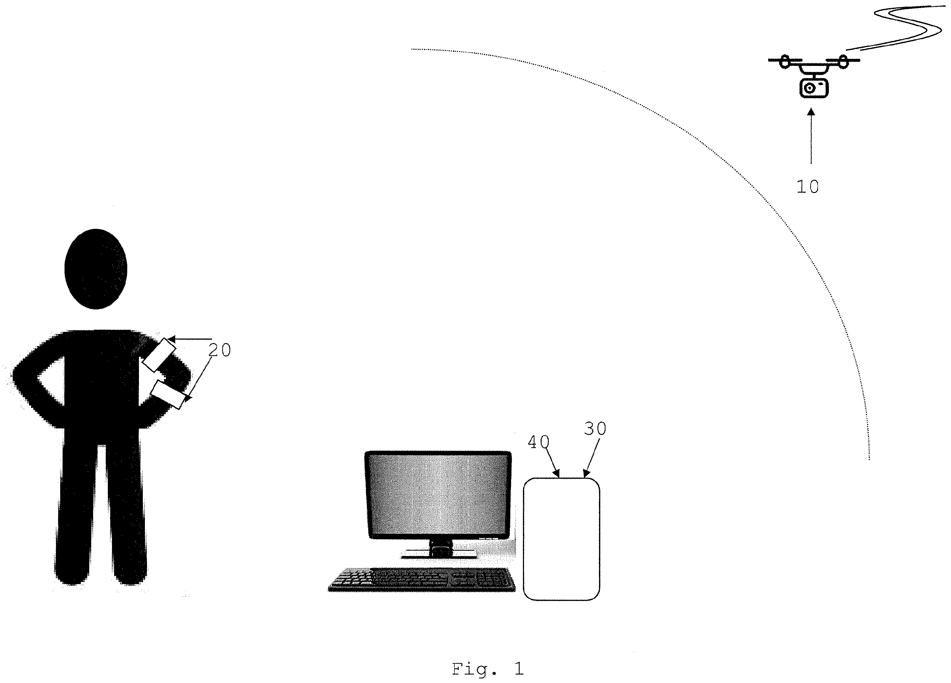

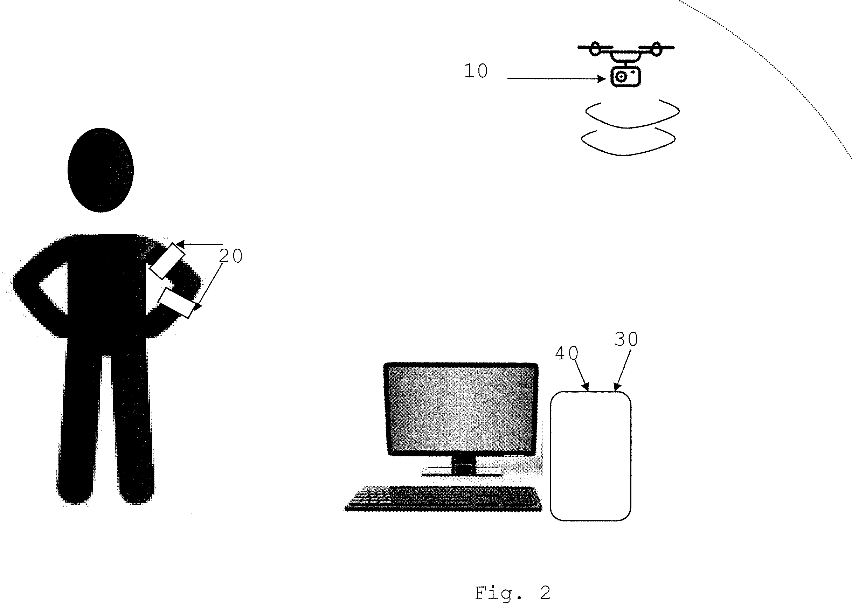

With particular reference to Figure 1, the mobile device 10 comprises drones 10 programmed to perform an autonomous flight, based for example on a preset flight plan or path, including those paths which extend outside the radius of action, i.e. radio range, of the associated electronic device 10, this radius of action being schematically indicated in Figure 1 by a curved line. During this flying stage, the electronic device 20 is unable to control the drone which however may be in ideal flying conditions, i.e. distant from obstacles, objects or persons, at a predefined height from the ground. In fact, it is known that the most difficult phase of the flight, especially for certain applications involving drones 10, is the landing in a given end location of the flight path, which is shown schematically in Figure 2.

According to an aspect of the present invention, provided again solely by way of example, the control system may be used for the landing phase of the drone 10, with the aid of the electronic device 20, once the electronic device 20 is able to communicate with the drone 10 within its radio range, for example when the drone 10 reaches its destination.

The person skilled in the art may easily understand that, if the communication between drone 10 and electronic device 20 is managed by means of the processor shown in Figures 1 and 2, the relevant radio range is that of the processor, since it is the processor which sends the radio commands to the drone 10, on the basis of the movements performed by the operator who is wearing the electronic device 20, which in turn is in communication with the processor, as will become clear from the description provided hereinbelow.

Figure 2 shows the drone when it has reached a stationary flying position at the end of its predefined flight. It remains in this position waiting to be guided to the ground by the operator.

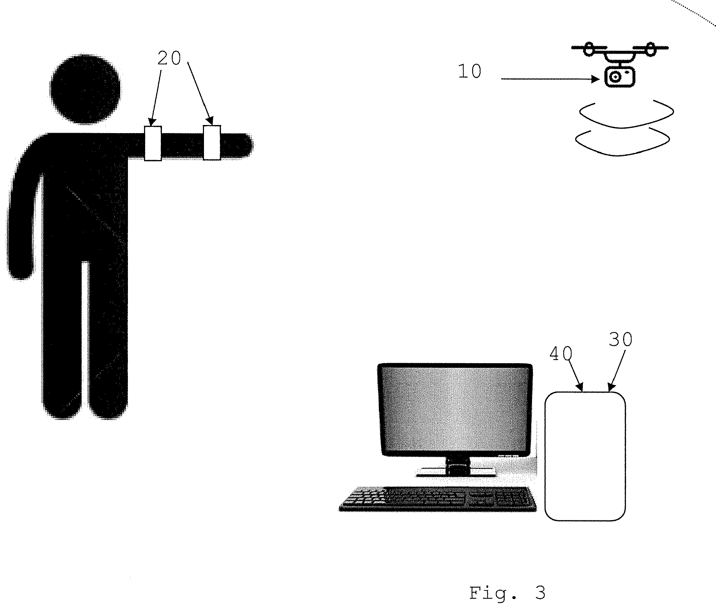

According to one aspect of the present invention, the operator performs a movement which is intended to engage the drone 10, i.e. inform the drone 10 that the operator is available in the vicinity of the final flight destination. This movement, in the example shown in Figure 3, consists in the operator pointing at the drone 10 with an extended arm so that the two electronic devices 30 on the arm and forearm are aligned. The alignment position may be determined by the distance between the electronic devices 20 in the first and second bands, but preferably also by adopting movement recognition procedures which are designed to prevent an accidental, temporary or momentary alignment of the electronic devices 30 being recognized by the drone 10 as an engagement command.

These procedures, for example, consist in classifying the movement performed by the operator, based on certain data detected by the electronic device(s) 20 and on a comparison of the movement thus classified with previously stored patterns or information representing an actual pointing movement, and not a random, temporary or momentary movement. Preferably, the pointing movement is followed by a pause, namely by the pointing position being maintained for "x" predefined seconds, for example 3 seconds.

It is clear from the above comments already made that the recognition of the movement may be performed by the processor which receives the movement signals from the electronic devices 20, for example provided with a gyroscope and inertial measurement unit, or directly by electronic devices, if provided with a controller and memory.

Still according to the control system of the present invention, following recognition of a predetermined movement corresponding to the extension of the arm as shown in Figure 3, a set-up command is transmitted to the drone 10, in response to which the drone 10 performs a set-up action which is also predefined.

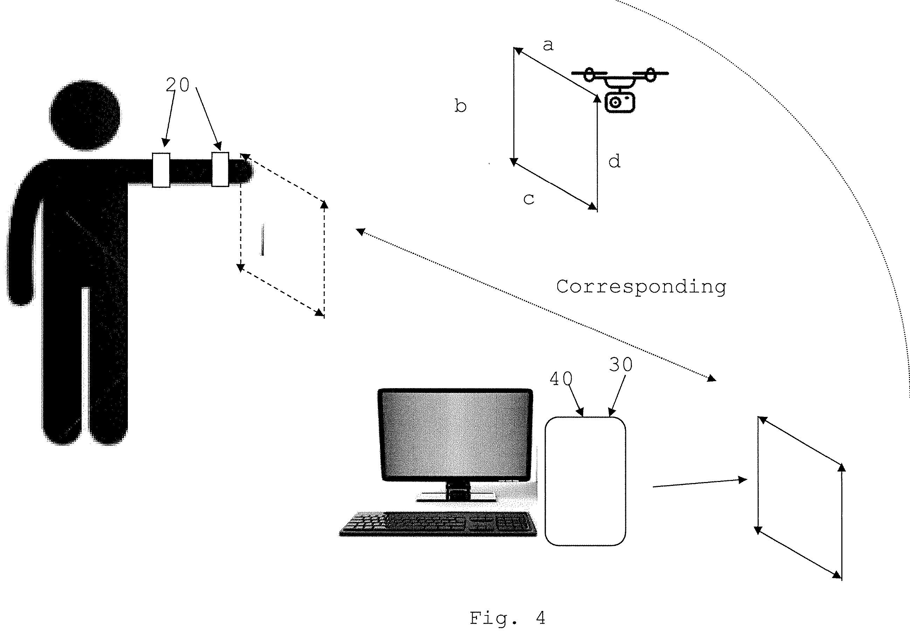

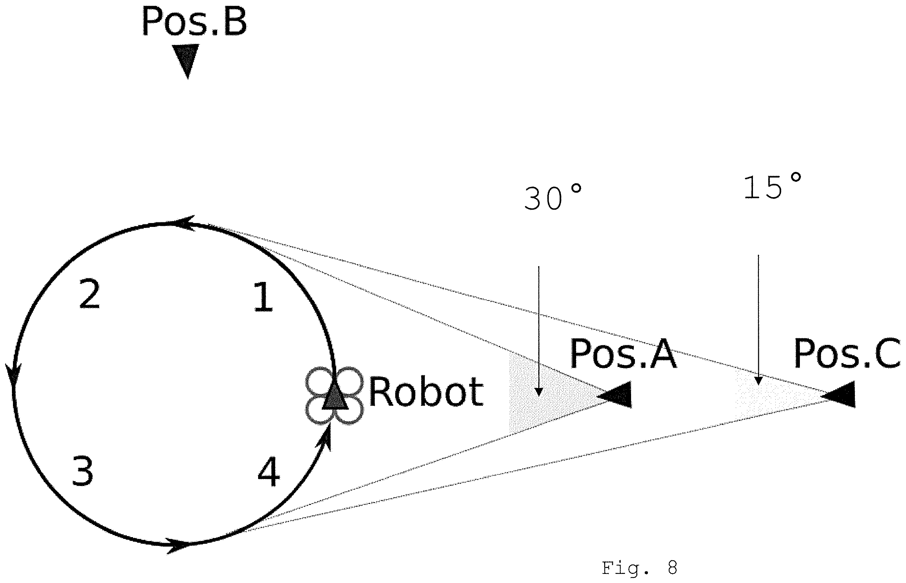

For example, with reference to the non-limiting example shown in Figure 4, the set-up action may be a movement "a" to the right, followed by a movement "b" downwards and again a movement "c" upwards and a movement "d" to the left, so as to return to the initial position, namely the position which the drone had before the movement "a" was performed. Said action in stored (in the form of information, for example changes in direction and associated sequence) in a memory 30 of the control system which may be inside the electronic device 20 or inside the processor 10, if present. As schematically shown in Figure 8, the set-up action may be or comprise a curvilinear - for example circular - movement at a predefined height or with changes in height.

During execution of the set-up action, the operator keeps the arm extended, pointing towards the drone, and guides the drone 10 remotely, performing therefore the same movements as the drone 10, but on a smaller scale, which is all the more smaller the greater the distance between drone 10 and operator.

A controller 40 of the control system, which is also incorporated in the electronic device 20 or in the processor 10, has the function of comparing the movement performed by the operator after the set-up command has been sent, with the information stored in the memory 30.

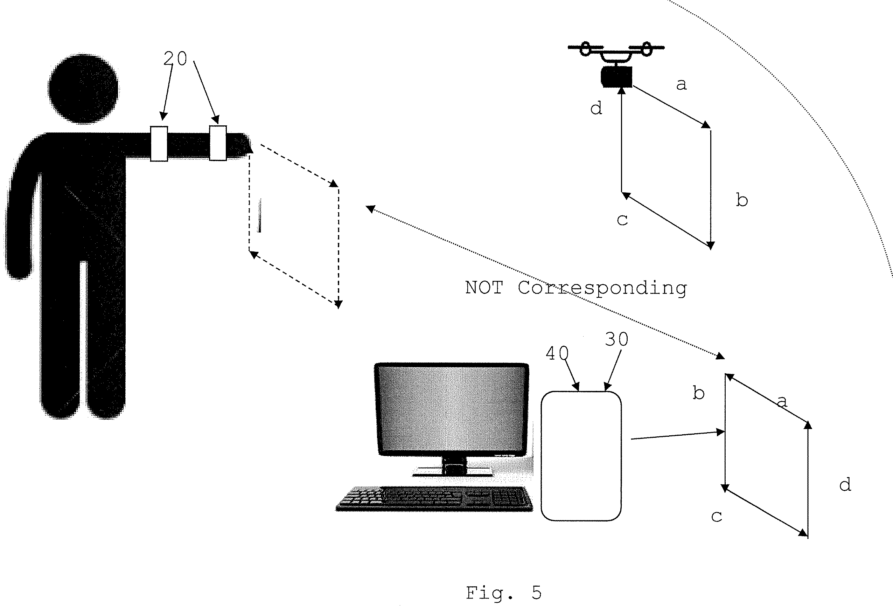

The outcome of the comparison is schematically shown in Figures 4 and 5. In Figure 4 the controller 40 establishes both the correspondence of the movements and the fact that the drone 10 has the same orientation as the operator.

In Figure 5, the controller 40 establishes that there is a correspondence only allowing for the fact that the drone 10 may have an orientation which is opposite to that of the operator; namely a movement "a", to the right, of the drone 10 (followed remotely by the operator with an arm movement to the right while pointing at the drone) does not correspond to the movement "a" stored in the memory 30 which is instead a movement to the left. In this case, therefore, the controller 40 allows engagement with the drone 10, but automatically converts the following commands from the reference system of the operator to that of the drone, thus allowing the operator to control the drone without having to worry about its orientation.

There is obviously no correspondence also when the drone 10 performs a completely different movement (for example upwards, downwards, upwards, downwards) from that stored in the memory 30 precisely because the drone 30 is not intended to be associated with the electronic device 20.

It is evident to the person skilled in the art that the sequence of control movements described with reference to Figures 4 and 5 is cited entirely by way of example and a similar result may be obtained by means of different procedures, at the end of which it is possible to determine whether the electronic device 20 is the device actually associated with the drone 10 - also in terms of the correct orientation or excluding further drones present within the radius of action - and is therefore authorized to send further commands to the drone, in particular landing commands.

With reference to Figure 8, further details are provided with regard to a possible implementation of the step for checking the movement performed by the human body (arm) when remotely guiding the mobile device during execution of the set-up action.

Advantageously, according to this possible implementation of the control system according to the present invention, it is possible to calculate or estimate also the position of the operator with respect to the mobile device.

This position is shown in Figure 8, indicated by Pos. A, Pos. B or Pos. C, in three possible execution situations of the control system.

In particular, the calculation or the estimation of the position of the operator with respect to the mobile device 10 is performed by comparing the movements of the mobile device 10 which are known a priori since associated with the set-up action, with the movements performed by the operator's arm, which are instead measured during remote guiding of the mobile device 10, i.e. in real time, while the mobile device 10 is performing the set-up action.

In the example according to Figure 8, the mobile device 10 (indicated by "Robot") follows a circular trajectory, for the sake of easier graphical representation indicated by four sections of a circumference 1, 2, 3, 4, in a two-dimensional schematic view.

The circular or square trajectories with a duration of about 5-10 seconds are preferred since the control system may analyse hundreds of positions of the arm and relate these positions to respective positions of the mobile device during its movement, in the set-up action.

The operator remotely guides the movement of the mobile device 10 with his/her arm.

Still by way of example, in the graphical representation it has been assumed that the mobile device 10 is at the same height with respect to the operator's arm and therefore that the movements of the arm are substantially along the horizontal axis or coplanar with the movements of the mobile device; however, it is envisaged that the control system according to the present invention is able to determine the position and the orientation of the mobile device also when the mobile device is at different height with respect to the operator. In other words, the control system according to the present invention is implemented so as to consider the mobile devices in a three-dimensional space and along circular trajectories such as those shown in Figure 8 or along any other trajectory, with any duration.

In particular, if the operator is in position A, the movement made by the operator's arm when guiding the mobile device 10 is, for each of the four segments, respectively:
1 - right; 2 - left; 3 - left; 4 - right.

Instead, if the operator is in position B, the movement made by the operator's arm when guiding the mobile device 10 is, for each of the four segments, respectively:
1 - right; 2 - right; 3 - left; 4 - left.

The controller determines the distance between the operator and the mobile device depending on the amplitude of the arm movements. For example, if the operator is in position A, the controller determines an arm movement which covers an angle of about 30 degrees overall. Instead, when the operator is in position C, the controller determines a movement which is similar to that observed in position A (in terms of changes in direction) but covering a smaller angle, for example of 15°.

Obviously, the drawing in Figure 8 shows only three possible positions, but the control system according to the present invention determines the position of the operator whatever the position with respect to the mobile device.

If the controller detects an arm movement of the type:
1 - left; 2 - left; 3 - left; 4 - left,
then it establishes that there is no correspondence between the position of the operator and the mobile device since in no position would it be possible to perform such movements when guiding the set-up action of the mobile device, known beforehand. In this case, the controller determines that there is no correspondence between the movements, for example because the operator does not intend to take control of the mobile device. In other words, in this chaotic situation, the movements of the operator's arm are not compatible with the trajectory of the mobile device, for any possible position of the operator with respect to the mobile device.

Advantageously, according to the present invention, if the controller establishes a correspondence between the movement of the arm and the movement of the operator then it may also identify simultaneously the position of the operator with respect to the mobile device.

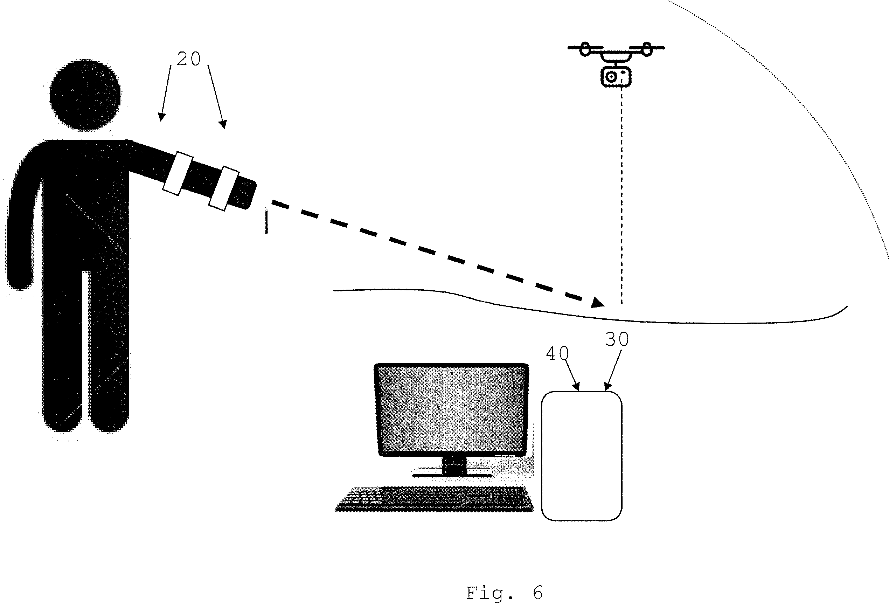

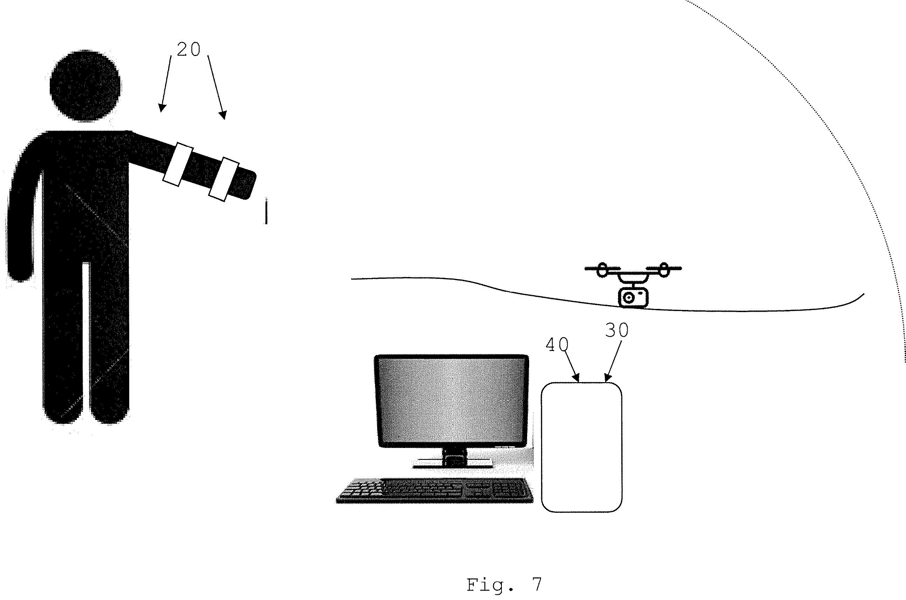

The controlling action described above with reference to a single mobile device may also be performed when several mobile devices are present. In other words, a second mobile device may be configured to perform as a set-up action a movement different from the movement which may be performed by the mobile device (10) in response to a set-up command. In this case, each mobile device follows its own trajectory, corresponding to the respective set-up action; for example, a first mobile device follows a circular trajectory and a second mobile device follows a figure-of-eight trajectory. With different trajectories, such as those mentioned above by way of example, the movements performed by the operator's arm when guiding by means of pointing one of the mobile devices cannot be compatible with the movements of the other mobile device or devices. Figure 6 in fact illustrates one of the further commands, i.e. the commands authorized by the controller 40 after the drone engagement step, and in particular the landing operation. This landing command, according to an embodiment of the present invention, corresponds to a pointing movement towards the ground of the operator, in particular pointing with an extended arm towards a position on the ground situated along a vertical of the stationary flying point of the drone 10. This pointing movement is preferably followed by the same pointing position being maintained for 3 seconds (or "x" seconds), before the drone 10 starts its descent towards the ground, this operation being able to be performed in an entirely safe manner, under the control of the operator, as schematically shown in Figure 7.

Advantageously, such a system allows several drones 10 and several electronic devices 20 associated with them to operate in a same area, excluding any interference and ensuring the correct orientation and association.

The control system, however, may be used during other delicate stages of the movement of other mobile devices 10, for example industrial robots or robots for domestic use. In this case, if the movement of the robot is too slow to perform a rapid engagement movement, it is envisaged that the robot may perform a set-up action which does not consist in the movement of the entire robot, but instead of one of its components.

This component may be, for example, a light beam emitter. The beam may be emitted towards the ground such that the operator is able to follow the beam on the ground while keeping the arm extended and pointing towards it and thus providing the controller with the same information already provided with reference to the drone, in order to check for correspondence between the movement of the operator and the preset information stored in the memory 30.

The control system according to the present invention therefore achieves numerous advantages which are described below only very briefly.

The mobile devices 10 may be connected to the electronic control devices 20 only during one or certain operating phases, in particular those where the supervision of an operator is preferable, and move autonomously outside of the radius of action of the electronic devices 20 during other operating phases.

The electronic devices 20 do not interfere with each other since each mobile device 10 may be engaged with the respective electronic device 20 only by means of predefined set-up actions, which exclude any possible conflict, especially if each mobile device 10 is associated with a specific set-up action.

By means of the set-up actions it is furthermore possible to check the correct orientation of the operator and the mobile device 10, also remotely, preventing therefore incorrect commands from being sent owing to the incorrect position of the mobile device 10. Moreover, the electronic device 20 is associated with the human body, making the sending of commands very easy to perform and precise.

## Claims

1. Control system for a mobile device (10) comprising:
- an electronic device (20) configured to be worn on the human body, preferably on an arm or wrist, to detect movements of a human body :
- a memory (30) comprising information relating to a set-up action which is performed by the mobile device (10) in response to a set-up command transmitted by the electronic device (20) following an engagement movement, the engagement movement being one of said movements recognized by the electronic device (20) for engaging the mobile device (10); **characterized in that** the control system comprises;
- a controller (40) configured to carry out a command validation, the command validation being a check of a correspondence , the correspondence comprising whether a pointing movement performed by the human body when remotely pointing at the mobile device (10) **in order to follow the mobile device (10) during execution of said set-up action** corresponds to the set-up action information stored in said memory (30), where the mobile device (10) is configured to **start the set-up action before being remotely followed by the human body;** and
- said controller (40) is configured to prevent the transmission of other commands to the mobile device (10), besides the set-up command, if said command validation does not establish said correspondence.
- wherein the controller (40) and the memory are incorporated in an apparatus of the control system in radio communication with the electronic device (20) and the mobile device (10).

2. Control system according to claim 1, **characterized in that** the set-up action which can be performed by the mobile device (10) comprises changes in direction, preferably in at least one of the following directions to the right, to the left, forwards, backwards, upwards, downwards.

3. Control system according to claim 1, **characterized in that** the mobile device is a drone.

4. Control system according to claim 3, **characterized in that** at least one command which can be transmitted by the electronic device (20) to the mobile device (10) following the command validation is a drone landing command, said drone landing command being associated with a landing movement made with the human body comprising remotely pointing the drone from a current stationary flying position down to a point on the ground along the vertical of the current stationary flying position, and said landing movement being associated with the drone landing command from said controller (40) only if followed by a stationary indication of a landing point for a predetermined time interval, i.e. preferably 3 seconds.

5. System according to claim 1, **characterized in that** the controller (40) is programmed to recognize an orientation and a position of the mobile device (10) with respect to the human body by means of said command validation.

6. System according to claim 4, **characterized in that**:
- the electronic device comprises at least a first and second component, said first component being worn on the arm and said second component being worn on the wrist or the forearm, said one movement associated with the set-up command corresponding to an extension of the arm and keeping the arm in said extended position for a predetermined time interval, preferably 3 seconds, and said extension being determined by said controller (40) on the basis of at least one predetermined movement pattern of the first component with respect to the second component.

7. System according to Claim 4, **characterized in that**:
- the electronic device comprises an operating pushbutton or operating means and said engagement movement for engaging the mobile device (10) corresponds to operation of said operating pushbutton or operating means.

8. System according to claim 1, **characterized in that** the controller and a transmitter of said commands are included in another device, preferably a computer, a smartphone or other processor, in wireless communication with said electronic device (20), preferably via a wireless network or Bluetooth interface.

9. System according to claim 1, **characterized in that** a transmitter of said commands are incorporated in the electronic device (20).

10. System according to claim 1, **characterized in that** the electronic device comprises an inertial measurement unit, preferably comprising at least one accelerometer and a gyroscope.

11. System according to claim 1, **characterized in that** said mobile device (10) is a robot provided with means for moving on the ground.

12. Control system according to claim 11, **characterized in that** the set-up action which can be performed by the robot (10) comprises the emission of a light beam with predetermined changes in direction, preferably in at least one of the the following directions: to the right, to the left, forwards, backwards, upwards, downwards.

13. Control system according to claim 1, **characterized in that** it comprises a second mobile device configured to perform a set-up action different from the set-up action of said mobile device (10) in response to said set-up command.

14. Method to control a mobile device (10) comprising:
- wearing an electronic device (20) on a human body, preferably on an arm or wrist, to detect movements of the human body;
- storing, in a memory (30) of an apparatus in radio communication with the electronic device (20) and with the mobile device (10), information relating to a set-up action which is performed by the mobile device (10) in response to a set-up command transmitted by the electronic device (20) following an engagement movement, the engagement movement being one of said movements recognized by the electronic device (20) for engaging the mobile device (10);
- detecting said engagement movement in the electronic device (20;)
- sending the set-up command from the electronic device to the mobile device (10) after said engagement movement is detected;
- executing the setup action in the mobile device (10) after receiving the set-up command;
**characterized by**:
- carrying out a command validation in a controller of said apparatus the command validation being a check of a correspondence, the correspondence comprising whether a pointing movement performed by the human body when remotely pointing at the mobile device (10) **in order to follow the mobile device (10) during execution of said set-up action** corresponds to the set-up action information stored in said memory (30), wherein the mobile device (10) is configured to start **the set-up action before being remotely followed by the human body;**
- preventing transmission of other commands from the electronic device (20) to the mobile device (10), besides the set-up command, if the pointing movement does not corresponds to said set-up action information
wherein the controller (40) and the memory are incorporated in said apparatus of a control system in radio communication with the electronic device (20) and the mobile device (10).

## Patentansprüche

1. Steuerungssystem für ein mobiles Gerät (10), aufweisend:
- ein elektronisches Gerät (20), das so konfiguriert ist, dass es am menschlichen Körper, vorzugsweise an einem Arm oder Handgelenk, getragen werden kann, um Bewegungen eines menschlichen Körpers zu erfassen;
- einen Speicher (30), der Informationen aufweist, die sich auf eine Einrichtungsaktion beziehen, die von dem mobilen Gerät (10) als Reaktion auf einen Einrichtungsbefehl ausgeführt wird, der von dem elektronischen Gerät (20) nach einer Einschaltbewegung übertragen wird, wobei die Einschaltbewegung eine der Bewegungen ist, die von dem elektronischen Gerät (20) zum Einschalten des mobilen Geräts (10) erkannt wird;
**dadurch gekennzeichnet, dass** das Steuersystem aufweist:
- eine Steuerung (40), die so konfiguriert ist, dass sie eine Befehlsvalidierung durchführt, wobei die Befehlsvalidierung eine Überprüfung einer Übereinstimmung ist, wobei die Übereinstimmung beinhaltet, ob eine Zeigebewegung, die von dem menschlichen Körper durchgeführt wird, wenn er aus der Ferne auf das mobile Gerät (10) zeigt, um dem mobilen Gerät (10) während der Ausführung der Einrichtungsaktion zu folgen, den Einrichtungsaktionsinformationen entspricht, die in dem Speicher (30) gespeichert sind, wobei das mobile Gerät (10) so konfiguriert ist, dass es die Einrichtungsaktion startet, bevor es aus der Ferne von dem menschlichen Körper verfolgt wird; und
- die Steuerung (40) so konfiguriert ist, dass sie die Übertragung anderer Befehle an das mobile Gerät (10) neben dem Einrichtungsbefehl verhindert, wenn die Befehlsüberprüfung die Übereinstimmung nicht feststellt;
- wobei die Steuerung (40) und der Speicher in eine Vorrichtung des Steuerungssystems eingebaut sind, die in Funkverbindung mit dem elektronischen Gerät (20) und dem mobilen Gerät (10) steht.

2. Steuerungssystem nach Anspruch 1, **dadurch gekennzeichnet, dass** die Einrichtungsaktion, die von dem mobilen Gerät (10) durchgeführt werden kann, Richtungsänderungen beinhaltet, vorzugsweise in mindestens eine der folgenden Richtungen: nach rechts, nach links, vorwärts, rückwärts, aufwärts, abwärts.

3. Steuerungssystem nach Anspruch 1, **dadurch gekennzeichnet, dass** das mobile Gerät eine Drohne ist.

4. Steuerungssystem nach Anspruch 3, **dadurch gekennzeichnet, dass** mindestens ein Befehl, der von dem elektronischen Gerät (20) im Anschluss an die Befehlsvalidierung an das mobile Gerät (10) übertragen werden kann, ein Drohnenlandebefehl ist, wobei der Drohnenlandebefehl mit einer mit dem menschlichen Körper ausgeführten Landebewegung verbunden ist, die aus der Ferne ein Zeigen der Drohne von einer aktuellen stationären Position nach unten zu einem Punkt auf dem Boden entlang der Vertikalen der aktuellen stationären Flugposition beinhaltet, und wobei die Landebewegung nur dann dem Drohnenlandebefehl von der Steuerung (40) zugeordnet ist, wenn eine stationäre Anzeige eines Landepunkts für ein vorbestimmtes Zeitintervall, d. h. vorzugsweise 3 Sekunden, folgt.

5. System nach Anspruch 1, **dadurch gekennzeichnet, dass** die Steuerung (40) so programmiert ist, dass sie mittels der Befehlsvalidierung eine Orientierung und eine Position des mobilen Geräts (10) in Bezug auf den menschlichen Körper erkennt.

6. System nach Anspruch 4, **dadurch gekennzeichnet, dass**:
- das elektronische Gerät mindestens eine erste und eine zweite Komponente aufweist, wobei die erste Komponente am Arm und die zweite Komponente am Handgelenk oder am Unterarm getragen wird, wobei die eine Bewegung, die mit dem Einrichtungsbefehl verbunden ist, einer Streckung des Arms entspricht und den Arm für ein vorbestimmtes Zeitintervall, vorzugsweise 3 Sekunden, in der gestreckten Position hält, und wobei die Streckung von der Steuerung (40) auf der Grundlage mindestens eines vorbestimmten Bewegungsmusters der ersten Komponente in Bezug auf die zweite Komponente bestimmt wird.

7. System nach Anspruch 4, **dadurch gekennzeichnet, dass**:
- das elektronische Gerät einen Bedientaster oder eine Bedieneinrichtung aufweist und die Einschaltbewegung zum Einschalten des mobilen Gerätes (10) der Betätigung des Bedientasters oder der Bedieneinrichtung entspricht.

8. System nach Anspruch 1, **dadurch gekennzeichnet, dass** die Steuerung und ein Sender der Befehle in einem anderen Gerät, vorzugsweise einem Computer, einem Smartphone oder einem anderen Prozessor, enthalten sind, das in drahtloser Kommunikation mit dem elektronischen Gerät (20) steht, vorzugsweise über ein drahtloses Netzwerk oder eine Bluetooth-Schnittstelle.

9. System nach Anspruch 1, **dadurch gekennzeichnet, dass** ein Sender der genannten Befehle in das elektronische Gerät (20) eingebaut ist.

10. System nach Anspruch 1, **dadurch gekennzeichnet, dass** das elektronische Gerät eine Inertialmesseinheit aufweist, vorzugsweise mit mindestens einem Beschleunigungsmesser und einem Gyroskop.

11. System nach Anspruch 1, **dadurch gekennzeichnet, dass** das mobile Gerät (10) ein Roboter ist, der mit Mitteln zur Bewegung auf dem Boden versehen ist.

12. Steuerungssystem nach Anspruch 11, **dadurch gekennzeichnet, dass** die vom Roboter (10) durchführbare Einrichtungsaktion die Aussendung eines Lichtstrahls mit vorgegebenen Richtungsänderungen, vorzugsweise in mindestens eine der folgenden Richtungen: nach rechts, nach links, vorwärts, rückwärts, aufwärts, abwärts, beinhaltet.

13. Steuerungssystem nach Anspruch 1, **dadurch gekennzeichnet, dass** es ein zweites mobiles Gerät aufweist, das so konfiguriert ist, dass es als Reaktion auf den Einrichtungsbefehl eine Einrichtungsaktion durchführt, die sich von der Einrichtungsaktion des mobilen Geräts (10) unterscheidet.

14. Verfahren zur Steuerung eines mobilen Geräts (10), beinhaltend:
- Tragen eines elektronischen Geräts (20) an einem menschlichen Körper, vorzugsweise an einem Arm oder Handgelenk, um Bewegungen des menschlichen Körpers zu erfassen;
- Speichern von Informationen in einem Speicher (30) einer Vorrichtung, das in Funkverbindung mit dem elektronischen Gerät (20) und dem mobilen Gerät (10) steht, die sich auf eine Einrichtungsaktion beziehen, die von dem mobilen Gerät (10) als Reaktion auf einen Einrichtungsbefehl ausgeführt wird, der von dem elektronischen Gerät (20) im Anschluss an eine Einschaltbewegung übertragen wird, wobei die Einschaltbewegung eine der Bewegungen ist, die von dem elektronischen Gerät (20) zum Einschalten des mobilen Geräts (10) erkannt werden;
- Erfassen der Einschaltbewegung in dem elektronischen Gerät (20); Senden des Einrichtungsbefehls von dem elektronischen Gerät an das mobile Gerät (10), nachdem die Einschaltbewegung erkannt wurde;
- Ausführen der Einrichtungsaktion in dem mobilen Gerät (10) nach dem Empfang des Einrichtungsbefehls; **gekennzeichnet durch**:
- Ausführen einer Befehlsvalidierung in einer Steuerung der Vorrichtung, wobei die Befehlsvalidierung eine Überprüfung einer Übereinstimmung ist, wobei die Übereinstimmung beinhaltet, ob eine Zeigebewegung, die von dem menschlichen Körper ausgeführt wird, wenn er aus der Ferne auf das mobile Gerät (10) zeigt, um dem mobilen Gerät (10) während der Ausführung der Einrichtungsaktion zu folgen, den Einrichtungsaktionsinformationen entspricht, die in dem Speicher (30) gespeichert sind, wobei das mobile Gerät (10) so konfiguriert ist, dass es die Einrichtungsaktion startet, bevor es aus der Ferne von dem menschlichen Körper verfolgt wird;
- Verhindern der Übertragung anderer Befehle von dem elektronischen Gerät (20) zu dem mobilen Gerät (10), neben dem Einrichtungsbefehl, wenn die Zeigebewegung nicht der Einrichtungsaktionsinformation entspricht, wobei die Steuerung (40) und der Speicher in die Vorrichtung eines Steuersystems, das in Funkverbindung mit dem elektronischen Gerät (20) und dem mobilen Gerät (10) steht, eingebaut sind.

## Revendications

1. Système de commande de dispositif mobile (10) comprenant :
- un dispositif électronique (20) configuré pour être porté sur un corps humain, de préférence sur un bras ou un poignet, afin de détecter les mouvements d'un corps humain :
- une mémoire (30) comprenant de l'information se rapportant à une action de mise en place qui est réalisée par le dispositif mobile (10) en réponse à une commande de mise en place transmise par le dispositif électronique (20) suivant un mouvement de mise en route, le mouvement de mise en route étant un mouvement parmi les dits mouvements reconnus par le dispositif électronique (20) pour mettre le dispositif mobile (10) en route, **caractérisé en ce que** le système de commande comprend :
- un contrôleur (40) configuré pour réaliser une validation de commande, la validation de commande étant une vérification d'une correspondance, la correspondance comprenant si un mouvement de pointage réalisé par le corps humain quand il y a pointage à distance au niveau du dispositif mobile (10) afin de suivre le dispositif mobile (10) pendant l'exécution de la dite action de mise en place correspond à l'information de l'action de mise en place stockée dans la dite mémoire (30), où le dispositif mobile (10) est configuré pour commencer l'action de mise en place avant d'être suivi à distance par le corps humain et
- le dit contrôleur (40) est configuré pour empêcher la transmission des autres commandes au dispositif mobile (10), en dehors de la commande de mise en place si la dite validation de commande n'établit pas la dite correspondance,
- où le contrôleur (40) et la mémoire sont incorporés dans un appareil du système de commande en communication radio avec le dispositif électronique (20) et le dispositif mobile (10) .

2. Système de commande selon la revendication 1, **caractérisé en ce que** l'action de mise en place qui peut être réalisée par le dispositif mobile (10) comprend des changements de direction, de préférence dans au moins une des directions suivantes vers la droite, vers la gauche, vers l'avant, vers l'arrière, vers le haut, vers le bas.

3. Système de commande selon la revendication 1, **caractérisé en ce que** le dispositif mobile est un drone.

4. Système de commande selon la revendication 3, **caractérisé en ce qu'**au moins une commande qui peut être transmise par le dispositif électronique (20) au dispositif mobile (10) suite à la validation de la commande est une commande d'atterrissage du drone, la dite commande d'atterrissage du drone étant associée avec un mouvement d'atterrissage exécuté par le corps humain comprenant le pointage à distance du drone depuis une position de vol stationnaire en cours vers le bas jusqu'à un point sur le sol le long de la verticale de la position de vol stationnaire en cours et le dit mouvement d'atterrissage étant associé avec la commande d'atterrissage du drone à partir du dit contrôleur (40) seulement s'il est suivi par une indication stationnaire d'un point d'atterrissage pour un intervalle de temps prédéterminé, c'est-à-dire de préférence 3 secondes.

5. Système selon la revendication 1, **caractérisé en ce que** le contrôleur (40) est programmé pour reconnaître une orientation et une position du dispositif mobile (10) par rapport au corps humain au moyen de la dite validation de la commande.

6. Système selon la revendication 4, **caractérisé en ce que** :
- le dispositif électronique comprend au moins un premier et un deuxième composant, le dit premier composant étant porté sur le bras et le dit deuxième composant étant porté sur le poignet ou l'avant-bras, le dit un mouvement associé avec la commande de mise en place correspondant à une extension du bras et le maintien du bras dans la dite position tendue pendant une période de temps prédéterminée, de préférence 3 secondes, et la dite extension étant déterminée par ledit contrôleur (40) sur la base d'au moins un motif de mouvement prédéterminé du premier composant par rapport au deuxième composant.

7. Système selon la revendication 4, **caractérisé en ce que** :
- le dispositif électronique comprend un bouton-poussoir de fonctionnement ou un moyen de fonctionnement et le dit mouvement de mise en route pour mettre le dispositif mobile (10) en route correspond au fonctionnement dudit bouton-poussoir de fonctionnement ou au moyen de fonctionnement.

8. Système selon la revendication 1, **caractérisé en ce que** le contrôleur et un transmetteur des dites commandes sont inclus dans un autre dispositif, de préférence un ordinateur, un smartphone ou un autre processeur, en communication sans fil avec le dit dispositif électronique (20), de préférence via un réseau sans fil ou une interface Bluetooth.

9. Système selon la revendication 1, **caractérisé en ce qu'**un transmetteur des dites commandes est incorporé dans le dispositif électronique (20).

10. Système selon la revendication 1, **caractérisé en ce que** le dispositif électronique comprend une unité de mesure de l'inertie, de préférence comprenant au moins un accéléromètre et un gyroscope.

11. Système selon la revendication 1, **caractérisé en ce que** ledit dispositif mobile (10) est un robot pourvu d'un moyen de se déplacer sur le sol.

12. Système de commande selon la revendication 11, **caractérisé en ce que** l'action de mise en place qui peut être réalisée par le robot (10) comprend l'émission d'un rayon lumineux avec des changements prédéterminés de direction, de préférence dans au moins une des directions suivantes : vers la droite, vers la gauche, vers l'avant, vers l'arrière, vers le haut, vers le bas.

13. Système de commande selon la revendication 1, **caractérisé en ce qu'**il comprend un deuxième dispositif mobile configuré pour réaliser une action de mise en place différente de l'action de mise en place du dit dispositif mobile (10) en réponse à la dite commande de mise en place.

14. Procédé de commande d'un dispositif mobile (10) comprenant :
- le port d'un dispositif électronique (20) sur un corps humain, de préférence sur un bras ou un poignet, pour détecter les mouvements du corps humain,
- le stockage, dans une mémoire (30) d'un appareil en communication radio avec le dispositif électronique (20) et avec le dispositif mobile (10), de l'information relative à une action de mise en place qui est réalisée par le dispositif mobile (10) en réponse à une commande de mise en place transmise par le dispositif électronique (20) à la suite d'un mouvement de mise en route, le mouvement de mise en route étant un mouvement parmi les dits mouvements reconnus par le dispositif électronique (20) pour mettre le dispositif mobile (10) en route,
- la détection du dit mouvement de mise en route dans le dispositif électronique (20),
- l'envoi de la commande de mise en place depuis le dispositif électronique vers le dispositif mobile (10) après la détection du dit mouvement de mise en route,
- l'exécution de l'action de mise en place dans le dispositif mobile (10) après la réception de la commande de mise en place,
**caractérisé en ce que** :
- la réalisation d'une validation de la commande dans un contrôleur du dit appareil, la validation de la commande étant une vérification d'une correspondance, la correspondance comprenant si un mouvement de pointage réalisé par le corps humain quand il y a pointage à distance du dispositif mobile (10) afin de suivre le dispositif mobile (10) pendant l'exécution de la dite action de mise en place correspond à l'information d'action de mise en place stockée dans la dite mémoire (30), où le dispositif mobile (10) est configuré pour commencer l'action de mise en place avant d'être suivi à distance par le corps humain,
- l'empêchement de la transmission d'autres commandes depuis le dispositif électronique (20) vers le dispositif mobile (10), en dehors de la commande de mise en place, si le mouvement de pointage ne correspond pas à la dite information d'action de mise en place où le contrôleur (40) et la mémoire sont incorporé dans le dit appareil d'un système de commande en communication radio avec le dispositif électronique (20) et le dispositif mobile (10).
